# EUROPEAN PATENT SPECIFICATION

(11) **EP 2 795 697 B1**
(45) Date of publication and mention of the grant of the patent: **04.11.2020**
(21) Application number: 11878037.8
(22) Date of filing: 20.12.2011
(51) Int. Cl.: H01M 8/0263, H01M 8/18, H01M 8/026

(54) **FLOW BATTERY WITH MIXED FLOW**
DURCHFLUSSBATTERIE MIT GEMISCHTEM DURCHFLUSS
BATTERIE À CIRCULATION AYANT UNE CIRCULATION MÉLANGÉE

(43) Date of publication of application: 29.10.2014
(73) Proprietor: United Technologies Corporation, Farmington, CT 06032 (US)
(72) Inventor: ZAFFOU, Rachid, West Hartford, Connecticut 06117 (US); PANDY, Arun, Manchester, Connecticut 06042 (US); PERRY, Michael L., Glastonbury, Connecticut 06033 (US)
(74) Representative: Dehns
(86) International application number: PCT/US2011/066143
(87) International publication number: WO 2013/095378

(56) References cited:
- WO-A1-2011/075135
- WO-A2-03/041199
- GB-A- 2 390 738
- US-A1- 2011 223 450
- US-B2- 6 828 055

## Description

### BACKGROUND

This disclosure relates to flow batteries for selectively storing and discharging electric energy.

Flow batteries, also known as redox flow batteries or redox flow cells, are designed to convert electrical energy into chemical energy that can be stored and later released when there is demand. As an example, a flow battery may be used with a renewable energy system, such as a wind-powered system, to store energy that exceeds consumer demand and later release that energy when there is greater demand.

A basic flow battery includes a redox flow cell that has a negative electrode and a positive electrode separated by an electrolyte layer, which may include separator such as an ion-exchange membrane. A negative liquid electrolyte is delivered to the negative electrode and a positive liquid electrolyte is delivered to the positive electrode to drive electrochemically reversible redox reactions. Upon charging, the electrical energy supplied causes a chemical reduction reaction in one electrolyte and an oxidation reaction in the other electrolyte. The separator prevents the electrolytes from mixing but permits selected ions to pass through to complete the redox reactions. Upon discharge, the chemical energy contained in the liquid electrolytes is released in the reverse reactions and electrical energy can be drawn from the electrodes. Flow batteries are distinguished from other electrochemical devices by, *inter alia,* the use of externally-supplied, liquid electrolytes that participate in a reversible electrochemical reaction. WO 2011/075135 A1 discloses a flow battery with a first and second liquid-porous electrodes. First and second flow fields are adjacent to the respective first liquid-porous electrode and second liquid-porous electrode. Each of the flow fields includes first channels having at least partially blocked outlets and second channels having at least partially blocked inlets. The second channels are interdigitated with the first channels. The flow fields can be arranged as bipolar plate and positively force the electrolyte into the porous electrode

### SUMMARY

From one aspect, the present invention provides a flow battery in accordance with claim 1.

From another aspect, the present invention provides a method of operating a flow battery in accordance with claim 7.

### BRIEF DESCRIPTION OF THE DRAWINGS

The various features and advantages of the disclosed examples will become apparent to those skilled in the art from the following detailed description. The drawings that accompany the detailed description can be briefly described as follows.
Figure 1 shows an example flow battery.
Figure 2 shows an example cell of the flow battery of Figure 1.
Figure 3A shows a channel of a bipolar plate which increases in cross-sectional area from a channel inlet to a channel outlet.
Figure 3B shows a channel of a bipolar plate which decreases in cross-sectional area from a channel inlet to a channel outlet.
Figure 4A shows a section taken at a channel inlet of an interdigitated channel arrangement.
Figure 4B shows a section taken at a channel outlet of an interdigitated channel arrangement.
Figure 5A shows a cross-section of a channel of a bipolar plate which includes protrusions.
Figure 5B shows a top view of the channel of Figure 5A.
Figure 6 shows a serpentine channel arrangement.
Figure 7 illustrates a linear channel arrangement.
Figure 8 shows a cross-section of a channel with a predetermined ratio of a width dimension to a depth dimension for positively forcing flow of a liquid electrolyte in an adjacent porous electrode outside the scope of the present invention.

### DETAILED DESCRIPTION OF THE PREFERRED EMBODIMENT

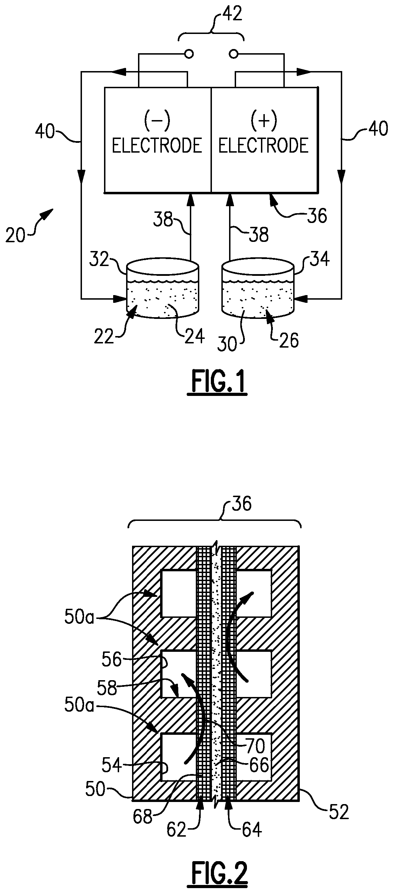

Figure 1 illustrates selected portions of an example flow battery 20 for selectively storing and discharging electrical energy. As an example, the flow battery 20 may be used to convert electrical energy generated in a renewable energy system to chemical energy that is stored until a later time when there is greater demand at which the flow battery 20 then converts the chemical energy back into electrical energy. The flow battery 20 may supply the electric energy to an electric grid, for example. As will be described, the disclosed flow battery 20 includes features for enhanced performance.

The flow battery 20 includes a liquid electrolyte 22 that has an electrochemically active specie 24 that functions in a redox pair with regard to an additional liquid electrolyte 26 and electrochemically active specie 30. For example, the electrochemically active species 24 and 30 are based on vanadium, bromine, iron, chromium, zinc, cerium, lead or combinations thereof. In embodiments, the liquid electrolytes 22 and 26 are aqueous solutions that include one or more of the electrochemically active species 24 and 30.

The liquid electrolytes 22 and 26 are contained in respective storage tanks 32 and 34. As shown, the storage tanks 32 and 34 are substantially equivalent cylindrical storage tanks; however, the storage tanks 32 and 34 can alternatively have other shapes and sizes.

The liquid electrolytes 22 and 26 are delivered (e.g., pumped) to one or more cells 36 of the flow battery 20 through respective feed lines 38 and are returned from the cell or cells 36 to the storage tanks 32 and 34 via return lines 40.

In operation, the liquid electrolytes 22 and 26 are delivered to the cell 36 to either convert electrical energy into chemical energy or convert chemical energy into electrical energy that can be discharged. The electrical energy is transmitted to and from the cell 36 through an electrical pathway 42 that completes the circuit and allows the completion of the electrochemical redox reactions.

Figure 2 shows a cross-section of a portion of one of the cells 36. It is to be understood that the flow battery 20 can include a plurality of such cells 36 in a stack, depending on the designed capacity of the flow battery 20. As shown, the cell 36 includes a first bipolar plate 50 and a second bipolar plate 52 spaced apart from the first bipolar plate 50. The bipolar plates 50 and 52 are electrically conductive and can be graphite plates or metallic plates, for example.

The first bipolar plate 50 includes a plurality of channels 50a, which include a first channel 54 and a second, adjacent channel 56 that is separated from the first channel 54 by a rib 58. In this example, the configuration of the second bipolar plate 52 is substantially similar to the first bipolar plate 50, although it is conceivable that the second bipolar plate 52 could alternatively have a dissimilar configuration.

Porous electrodes 62 and 64 are arranged immediately adjacent the respective first and second bipolar plates 50 and 52. Thus, the porous electrode 62 is in contact with the face of the first bipolar plate 50 and the porous electrode 64 is in contact with the face of the second bipolar plate 52. A separator, such as an ion-exchange membrane, 66 is arranged between the porous electrodes 62 and 64.

The porous electrodes 62 and 64 are composed of material that is electrically conductive, relatively corrosion resistant, and catalytically active with regard to the electrochemical specie. In one example, one or both of the porous electrodes 62 and 64 include a carbon paper 68, such as carbon fiber paper, that is catalytically active with regard to the liquid electrolyte 22 and/or 26. That is, the surfaces of the carbon material of the carbon paper 68 are catalytically active in the flow battery 20. In the redox reactions of the flow battery 20, the energy barrier to the reaction is relatively low, and thus stronger catalytic materials, such as noble metals or alloys, are not required as with electrochemical devices that utilize gaseous reactants, such as oxygen or hydrogen. In one embodiment, the carbon paper 68 is activated using a prior thermal and/or chemical treatment process to clean the carbon material and produce carbon surfaces that serve as improved active catalytic sites.

There is a tradeoff in flow batteries between performance and pressure drop of the flow of the liquid electrolytes through a cell. For example, a flow battery may not utilize flow fields. In such a design, the liquid electrolytes flow entirely through porous electrodes from end to end. This type of design provides either relatively poor performance with acceptable pressure drop because the electrodes are relatively thick to accommodate all of the flow through the porous media; or, relatively good performance but high pressure drop because the electrodes are thinner and the flow resistance through the entire porous electrode is relatively high (which increases the parasitic loads in order to move the electrolyte through the cell) and relatively low durability because of stack compression on the electrodes and ion-exchange membrane. In comparison, another type of flow battery may utilize flow field channels. In such a design, the liquid electrolytes flow through the channels and diffuse into the adjacent electrodes. This type of design provides less of a pressure drop because the liquid electrolytes flow relatively unrestricted through the channels and the electrodes can be thinner, but the performance is relatively poor because of the relatively steep concentration gradients in the electrodes (necessary to promote a high rate of diffusive transport) and non-uniform diffusion of the electrolytes into the electrodes. What is needed are cell designs that can use relatively thin electrodes with forced convective flow and still enable acceptable pressure drops across the cells.

As will be described, the channels 50a of the bipolar plate 50 of the flow battery 20 have at least one of a channel arrangement or a channel shape that is configured to positively force at least a portion of the flow 70 of the liquid electrolyte 22 into the porous electrode 62. The term "positively forcing" or forced convective flow or variations thereof refers to the structure of the bipolar plate 50 being configured to move the liquid electrolyte 22 from the channels 50a into the porous electrode 62 by the mechanism of a pressure gradient. In comparison, diffusion is a concentration-driven mechanism. The bipolar plate 50 thereby provides a "mixed flow" design that is a combination of the positively forced flow 70 through the electrode 62 and flow through the channels 50a to achieve a desirable balance between pressure drop and performance.

It is to be appreciated that the bipolar plate 50 can have a variety of channel arrangements and/or a channel shapes that are configured to positively force at least a portion of the flow 70 of the liquid electrolyte 22 into the porous electrode 62. The following are nonlimiting examples of such channel arrangements and/or a channel shapes.

In the example shown in Figure 2, the channel 56 is located downstream from the channel 54, and thus the liquid electrolyte 22 flowing in the channel 56 is at a lower pressure than the liquid electrolyte 22 flowing in the channel 54 due to pressure losses. The difference in pressure causes a pressure gradient between the channels 54 and 56 that positively forces at least a portion of the liquid electrolyte 22 to flow over the rib 58 from the channel 54 into the channel 56. In some examples, the channels 54 and 56 are channels of a serpentine channel arrangement, interdigitated channel arrangement, partially interdigitated channel arrangement or combination thereof to provide the pressure gradient.

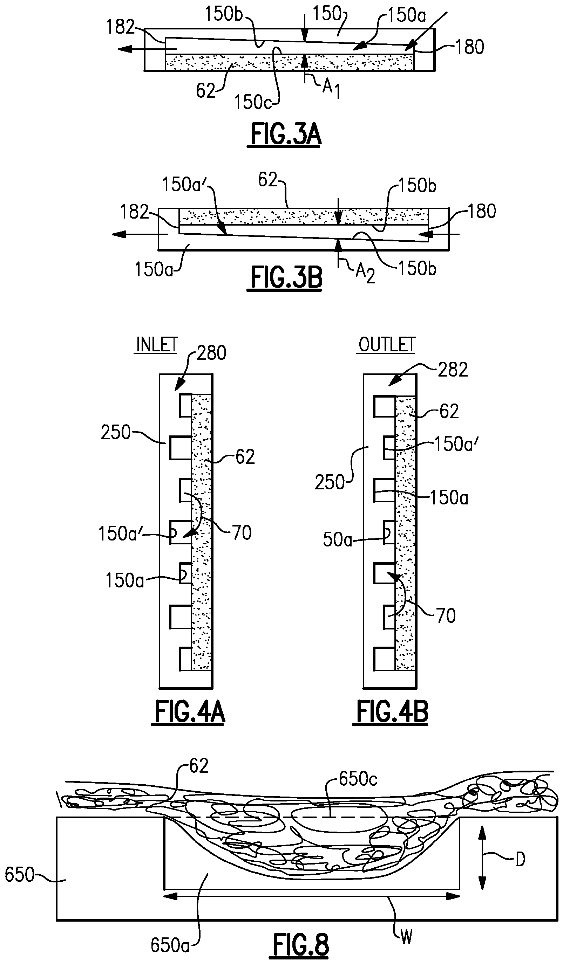

Figure 3A shows an example channel shape of a channel 150a of a bipolar plate 150 that is configured to positively force at least a portion of the flow of the liquid electrolyte 22 into the porous electrodes 62. In this disclosure, like reference numerals designate like elements where appropriate and reference numerals with the addition of one-hundred or multiples thereof designate modified elements that are understood to incorporate the same features and benefits of the corresponding elements. As shown, the channel 150a extends over a length between a channel inlet 180 and a channel outlet 182. In an example, the channel outlet 180 is an orifice that opens to a common manifold that serves to deliver liquid electrolyte 22 into the channels 150a. Similarly, the channel outlet 182 is an orifice that opens to a common manifold that serves to deliver the liquid electrolyte 22 back to the return line 40 and storage tank 32.

In this example, the channel 150a defines a cross-sectional area A₁ that extends between side walls (not shown), a bottom 150b of the channel 150a and an open top 150c of the channel 150a. The porous electrode 62 is arranged adjacent to the open top 150c. As shown, the cross-sectional area A₁ varies along the length of the channel 150a from the channel inlet 180 to the channel outlet 182. In this example, the bottom 150b of the channel 150a is sloped such that the cross-sectional area A₁ increases from the channel inlet 180 to the channel outlet 182. Alternatively, or in addition to the sloped bottom 150b, the side walls are sloped to vary A₁.

In operation, the liquid electrolyte 22 is at a higher pressure in the narrower portion of the channel 150a, which positively forces the liquid electrolyte 22 to flow into the adjacent porous electrode 62.

Figure 3B shows another example channel 150a' in which the bottom 150b slopes the other way such that a cross-sectional area A₂ decreases from the channel inlet 180 to the channel outlet 182.

Figure 4A shows a cross-sectional view taken at a channel inlet 280 of a bipolar plate 250, and Figure 4B shows a cross-sectional view of the bipolar plate 250 taken at a channel outlet 282. In this example, the bipolar plate 250 includes first channels 150a and second channels 150a', as described above with regard to Figures 3A and 3B. The first channels 150a are interdigitated with the second channels 150a'.

In operation, the channel shapes and interdigitated channel arrangement provide a pressure gradient between adjacent channels 150 and 150a' that positively forces flow 70 of the liquid electrolyte 22 into the porous electrode 62. The cross-sectional area variations can be designed to obtain the amount of forced flow through the porous electrode desired. The extreme case is to make the inlet cross-sectional areas of every other channel zero, such that all of the electrolyte must pass through the porous electrode in order to exit the cell.

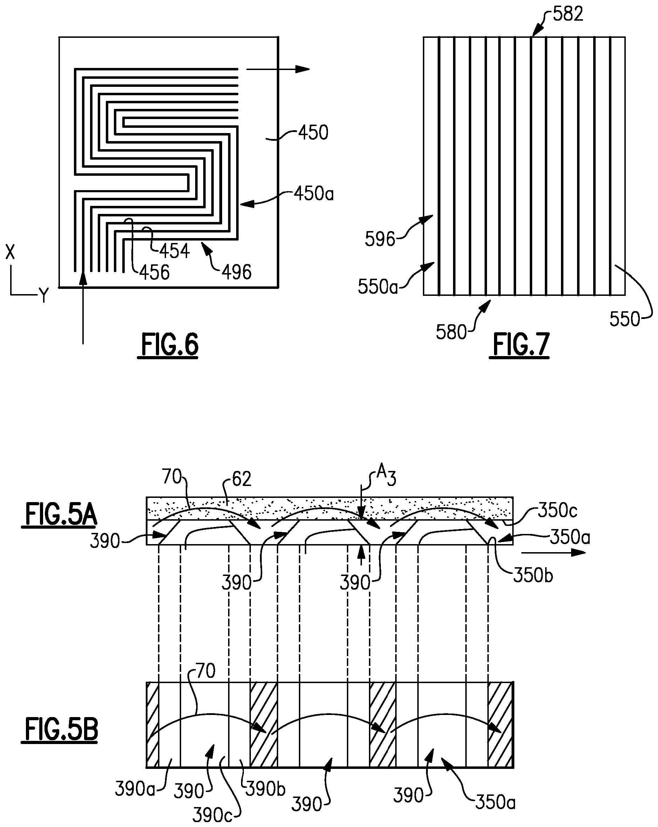

Figure 5A shows another example channel 350a which has a cross-sectional area A₃ that varies along the length of the channel 350a. The channel 350a includes a plurality of protrusions 390 that extend from a bottom 350b of the channel 350a toward an open top 350c of the channel 350a and between the side walls of the channel 350a.

In the illustrated example, each of the protrusions 390 provides a change in the cross-sectional area A₃ as a function of length along the channel 350a. In operation, as the liquid electrolyte 22 flows through the channel 350a and encounters the protrusions 390, the flow 70 of the liquid electrolyte 22 is positively forced over the protrusion 390 and into the adjacent porous electrode 62. Thus, each of the protrusions 390 effectively increases the local pressure of the liquid electrolyte 22 to positively force it into the porous electrode 62. The valleys between the protrusions 390 likewise effectively reduce the local pressure such that the liquid electrolyte 22 flows back into the channel 350a from the porous electrode 62.

Figure 5B shows a top view of the channel 350a and protrusions 390. In this example, each of the protrusions 390 includes sloped sidewalls 390a and 390b that are transversely sloped with regard to the plane of the bottom 350b of the channel 350a. The sloped sidewalls 390a and 390b terminate at a top surface 390c. Thus, the flowing liquid electrolyte 22 first encounters the transversely sloped sidewall 390a which gradually increases the pressure of the liquid electrolyte 22 to a maximum pressure over the top 390c. Similarly, the second transversely sloped sidewall 390b gradually reduces the pressure of the flowing liquid electrolyte 22 to the bottom 350b.

Figure 6 shows bipolar plate 450 that has a serpentine channel arrangement 496 that positively forces at least a portion of the flow of the liquid electrolyte 22 into the adjacent porous electrode 62. The driving force for the flow through the porous electrode in this case is due to the difference in pressure between adjacent channels at different distances from the common inlet due to the serpentine arrangement. The serpentine channel arrangement 496 includes a plurality of channels 450a, including a first channel 454 and a second, adjacent channel 456 that are separated by a rib (not shown) as described above. The channels 450a include portions that extend in an X-direction and other portions that extend in a Y-direction back and forth over the bipolar plate 450. A serpentine arrangement with less channels will promote more forced flow through the electrode, with the extreme case being a single serpentine channel. Alternatively, a cell may incorporate multiple serpentine channels where each channel transverses a limited X and Y region of the plate (not shown).

Figure 7 shows another example bipolar plate 550 that has channel arrangement 596 of channels 550a. In this example, the channels 550a extend linearly between a channel inlet 580 and a channel outlet 582. The individual channels 550a are tapered as shown in Figures 3A and 3B or alternatively include protrusions 390 as shown in Figures 5A and 5B. These channels could also be tapered in a manner analogous to Figures 3A and 3B except that the channels vary in channel width instead of channel depth as shown in Figures 3A and 3B.

Figure 8 shows a portion of another example bipolar plate 650, outside the scope of the present invention, having a channel 650a that is representative of a plurality of such channels in the bipolar plate 650. In this example, the channel 650a has a uniform cross-sectional area and extends between a channel inlet and a channel outlet, as previously described. The channel 650a also has a width dimension W that extends between sidewalls of the channel 650a and a depth dimension D that extends between a bottom 650b and an open top 650c. The width dimension W and the depth dimension D are selected to positively force the flow of liquid electrolyte 22 into the adjacent porous electrode 62. For example, the width dimension W and depth dimension D are selected to be within a ratio of W:D. In one example, the ratio W:D is from 1.5:1 to 3:1. The given ratio provides that the channel 650a is wider than it is deep. Thus, the adjacent porous electrode 62 tends to "tent" into the channel 650a. The tenting of the porous electrode 62 into the channel 650a reduces the open volume of the channel 650a and thereby increases the pressure of the liquid electrolyte 22. The increased pressure positively forces the liquid electrolyte to flow into the porous electrode 62.

## Claims

1. A flow battery (20) comprising:
a liquid electrolyte (22,26) including an electrochemically active specie;
a bipolar plate (50,52;150;250;450;550;650) including a face having channels (50a;150a,150a';350a;450a;550a;650a) therein for receiving flow of the liquid electrolyte (22,26); and
a porous electrode (62,64) contacting the face and extending across open tops (150c;350c;650c) of the channels (50a;150a,150a';350a;450a;550a;650a), the porous electrode (62,64) being catalytically active with regard to the liquid electrolyte (22,26), and
wherein the channels (50a;150a,150a';350a;450a;550a;650a) of the bipolar plate (50,52;150;250;450;550;650) have a channel shape having a cross-sectional area that varies over the length of the channel (50a;150a,150a';350a;450a;550a;650a) that is configured to positively force at least a portion of the flow of the liquid electrolyte (22,26) into the porous electrode (62,64).

2. The flow battery as recited in claim 1, wherein the channel arrangement (496;596) includes a first channel (54;150a;454) and a second, adjacent channel (56;150a';456) separated from the first channel (150a;454) by a rib (58).

3. The flow battery as recited in claim 1 or 2, wherein the channels (50a;150a,150a';350a;450a;550a;650a) have a serpentine channel arrangement (496).

4. The flow battery as recited in any preceding claim, wherein the channel shape defines a cross-sectional area that decreases from a channel inlet (180;280;580) to a channel outlet (182;282;582), or alternatively defines a cross-sectional area that increases from a channel inlet (180;280;580) to a channel outlet (182;282;582).

5. The flow battery as recited in any preceding claim, wherein the channels (50a;150a,150a';350a;450a;550a;650a) include first channels (50a;150a,150a';350a;450a;550a;650a) that each have a cross-sectional area that increases from a channel inlet (180;280;580) to a channel outlet (182;282;582) and second channels (50a;150a,150a';350a;450a;550a;650a) that each have a cross-sectional area that decreases from the channel inlet (180;280;580) to the channel outlet (182;282;582), and the first channels (50a; 150a, 150a';350a;450a;550a;650a) are interdigitated with the second channels (50a;150a,150a';350a;450a;550a;650a).

6. The flow battery as recited in any preceding claim, wherein each of the channels (50a;150a,150a';350a;450a;550a;650a) has a width (W) extending between side walls (390a,390b) and a depth (D) extending between a bottom wall (150b;350b;650b) and an open top (150c;350c;650c), and the channel shape includes a plurality of protrusions (390) that extend from the bottom wall (150b;350b;650b) toward the open top (150c;350c;650c), and wherein, optionally, each of the plurality of protrusions (390) extends from one of the side walls (390a,390b) to the other of the side walls (390a,390b).

7. A method of operating a flow battery (20), the method comprising:
providing a bipolar plate (50,52;150;250;450;550;650) including a face having channels (50a;150a,150a';350a;450a;550a;650a) therein and a porous electrode (62,64) contacting the face and extending across open tops (150c;350c;650c) of the channels (50a;150a,150a';350a;450a;550a;650a);
establishing a flow of a liquid electrolyte (22,26) in the channels (50a;150a,150a';350a;450a;550a;650a), the liquid electrolyte (22,26) including an electrochemically active specie and the porous electrode (62,64) being catalytically active with regard to the liquid electrolyte (22,26); and
positively forcing at least a portion of the flow of the liquid electrolyte (22,26) from the channels (50a;150a,150a';350a;450a;550a;650a) into the porous electrode (62,64) using a channel shape having a cross-sectional area that varies over the length of the channel (50a;150a,150a';350a;450a;550a;650a).

8. The method as recited in claim 7, including positively forcing the at least a portion of the flow by establishing a pressure gradient between a first channel (54;150a;454) and a second, adjacent channel (56;150a';456) to force the at least a portion of the flow over a rib (58) between the first channel (54;150a;454) and the second channel (56;150a';456).

9. The method as recited in claim 7 or 8, including using a serpentine channel arrangement (496) to positively force the at least a portion of the flow of the liquid electrolyte (22,26) from the channels (50a;150a,150a';350a;450a;550a;650a) into the porous electrode (62,64).

10. The method as recited in any of claims 7 to 9, including using a channel shape that has a cross-sectional area that decreases from a channel inlet (180;280;580) to a channel outlet (182;282;582) to positively force the at least a portion of the flow of the liquid electrolyte (22,26) from the channels (50a;150a,150a';350a;450a;550a;650a) into the porous electrode (62,64), or alternatively using a channel shape that has a cross-sectional area that increases from a channel inlet (180;280;580) to a channel outlet (182;282;582) to positively force the at least a portion of the flow of the liquid electrolyte (22,26) from the channels (50a;150a,150a';350a;450a;550a;650a) into the porous electrode (62,64).

11. The method as recited in claim 7 or 8, including using a channel arrangement (496;596) that has first channels (50a;150a,150a';350a;450a;550a;650a) that are interdigitated with second channels (50a;150a,150a';350a;450a;550a;650a) to positively force the at least a portion of the flow of the liquid electrolyte (22,26) from the channels (50a;150a,150a';350a;450a;550a;650a) into the porous electrode (62,64), the first channels (50a;150a,150a';350a;450a;550a;650a) each having a cross-sectional area that increases from a channel inlet (180;280;580) to a channel outlet (182;282;582) and the second channels (50a;150a,150a';350a;450a;550a;650a) each having a cross-sectional area that decreases from the channel inlet (180;280;580) to the channel outlet (182;282;582).

12. The method as recited in any of claims 7 to 11, including using a channel shape that has a width extending between side walls (390a,390b), a depth (D) extending between a bottom wall (150b;350b;650b) and an open top (150c;350c;650c) and a plurality of protrusions (390) extending from the bottom wall (150b;350b;650b) toward the open top (150c;350c;650c) to positively force the at least a portion of the flow of the liquid electrolyte (22,26) from the channels (50a;150a,150a';350a;450a;550a;650a) into the porous electrode (62,64).

## Patentansprüche

1. Flüssigbatterie (20), umfassend:
einen flüssigen Elektrolyten (22, 26), der eine elektrochemisch aktive Spezies beinhaltet;
eine Bipolarplatte (50, 52; 150; 250; 450; 550; 650), die eine Seite beinhaltet, die Kanäle (50a; 150a, 150a'; 350a; 450a; 550a; 650a) darin zum Aufnehmen des Stroms des flüssigen Elektrolyten (22, 26) aufweist; und
eine poröse Elektrode (62, 64), die die Seite berührt und sich über offene Oberseiten (150c; 350c; 650c) der Kanäle (50a; 150a, 150a'; 350a; 450a; 550a; 650a) erstreckt, wobei die poröse Elektrode (62, 64) in Bezug auf den flüssigen Elektrolyten (22, 26) katalytisch aktiv ist, und
wobei die Kanäle (50a; 150a, 150a'; 350a; 450a; 550a; 650a) der Bipolarplatte (50, 52; 150; 250; 450; 550; 650) eine Kanalform aufweisen, die eine Querschnittfläche aufweist, die über die Länge des Kanals (50a; 150a, 150a'; 350a; 450a; 550a; 650a) variiert und die so konfiguriert ist, dass sie mindestens einen Teil des Stroms des flüssigen Elektrolyten (22, 26) eindeutig in die poröse Elektrode (62, 64) drängt.

2. Flüssigbatterie nach Anspruch 1, wobei die Kanalanordnung (496; 596) einen ersten Kanal (54; 150a; 454) und einen zweiten, angrenzenden Kanal (56; 150a'; 456) beinhaltet, der von dem ersten Kanal (150a; 454) durch einen Steg (58) getrennt ist.

3. Flüssigbatterie nach Anspruch 1 oder 2, wobei die Kanäle (50a; 150a, 150a'; 350a; 450a; 550a; 650a) eine gewundene Kanalanordnung (496) aufweisen.

4. Flüssigbatterie nach einem der vorstehenden Ansprüche, wobei die Kanalform eine Querschnittsfläche definiert, die sich von einem Kanaleinlass (180; 280; 580) zu einem Kanalauslass (182; 282; 582) verringert, oder alternativ eine Querschnittsfläche definiert, die sich von einem Kanaleinlass (180; 280; 580) zu einem Kanalauslass (182; 282; 582) vergrößert.

5. Flüssigbatterie nach einem der vorstehenden Ansprüche, wobei die Kanäle (50a; 150a, 150a'; 350a; 450a; 550a; 650a) erste Kanäle (50a; 150a, 150a'; 350a; 450a; 550a; 650a), die jeweils eine Querschnittsfläche aufweisen, die sich von einem Kanaleinlass (180; 280; 580) zu einem Kanalauslass (182; 282; 582) vergrößert, und zweite Kanäle (50a; 150a, 150a'; 350a; 450a; 550a; 650a) beinhalten, die jeweils eine Querschnittsfläche aufweisen, die sich vom Kanaleinlass (180; 280; 580) zum Kanalauslass (182; 282; 582) verringert, und wobei die ersten Kanäle (50a; 150a, 150a'; 350a; 450a; 550a; 650a) mit den zweite Kanälen (50a; 150a, 150a'; 350a; 450a; 550a; 650a) verzahnt sind.

6. Flüssigbatterie nach einem der vorstehenden Ansprüche, wobei jeder der Kanäle (50a; 150a, 150a'; 350a; 450a; 550a; 650a) eine Weite (W), die sich zwischen Seitenwänden (390a, 390b) erstreckt, und eine Tiefe (D) aufweist, die sich zwischen einer Bodenwand (150b; 350b; 650b) und einer offenen Oberseite (150c; 350c; 650c) erstreckt, und wobei die Kanalform eine Vielzahl von Vorsprüngen (390) beinhaltet, die sich von der Bodenwand (150b; 350b; 650b) zur offenen Oberseite (150c; 350c; 650c) hin erstrecken, und wobei sich optional jeder aus der Vielzahl von Vorsprüngen (390) von einer der Seitenwände (390a, 390b) zu der anderen der Seitenwände (390a, 390b) erstreckt.

7. Verfahren zum Betreiben einer Flüssigbatterie (20), wobei das Verfahren Folgendes umfasst:
Bereitstellen einer Bipolarplatte (50, 52; 150; 250; 450; 550; 650), die eine Seite beinhaltet, die Kanäle (50a; 150a, 150a'; 350a; 450a; 550a; 650a) darin und eine poröse Elektrode (62, 64) aufweist, die die Seite berührt und sich über offene Oberseiten (150c; 350c; 650c) der Kanäle (50a; 150a, 150a'; 350a; 450a; 550a; 650a) erstreckt;
Herstellen eines Stroms eines flüssigen Elektrolyten (22,26) in die Kanäle (50a; 150a, 150a'; 350a; 450a; 550a; 650a), wobei der flüssige Elektrolyt (22, 26) eine elektrochemisch aktive Spezies beinhaltet und die poröse Elektrode (62, 64) in Bezug auf den flüssigen Elektrolyten (22, 26) katalytisch aktiv ist; und
eindeutiges Drängen mindestens eines Teils des Stroms des flüssigen Elektrolyten (22, 26) von den Kanälen (50a; 150a, 150a'; 350a; 450a; 550a; 650a) in die poröse Elektrode (62, 64) unter Verwendung einer Kanalform, die eine Querschnittsfläche aufweist, die über die Länge des Kanals (50a; 150a, 150a'; 350a; 450a; 550a; 650a) variiert.

8. Verfahren nach Anspruch 7, beinhaltend das eindeutige Drängen des mindestens einen Teils des Stroms durch Herstellen eines Druckgradienten zwischen einem ersten Kanal (54; 150a; 454) und einem zweiten, angrenzenden Kanal (56; 150a'; 456), um den mindestens einen Teil des Stroms über einen Steg (58) zwischen dem ersten Kanal (54; 150a; 454) und dem zweiten Kanal (56; 150a'; 456) zu drängen.

9. Verfahren nach Anspruch 7 oder 8, beinhaltend das Verwenden einer gewundenen Kanalanordnung (496), um eindeutig den mindestens einen Teil des Stroms des flüssigen Elektrolyten (22, 26) aus den Kanälen (50a; 150a, 150a'; 350a; 450a; 550a; 650a) in die poröse Elektrode (62, 64) zu drängen.

10. Verfahren nach einem der Ansprüche 7 bis 9, beinhaltend das Verwenden einer Kanalform, die eine Querschnittsfläche aufweist, die sich von einem Kanaleinlass (180; 280; 580) zu einem Kanalauslass (182; 282; 582) verringert, um den mindestens einen Teil des Stroms des flüssigen Elektrolyten (22, 26) eindeutig aus den Kanälen (50a; 150a, 150a'; 350a; 450a; 550a; 650a) in die poröse Elektrode (62, 64) zu drängen, oder alternativ das Verwenden einer Kanalform, die eine Querschnittsfläche aufweist, die sich von einem Kanaleinlass (180; 280; 580) zu einem Kanalauslass (182; 282; 582) vergrößert, um eindeutig den mindestens einen Teil des Stroms des flüssigen Elektrolyten (22, 26) aus den Kanälen (50a; 150a, 150a'; 350a; 450a; 550a; 650a) in die poröse Elektrode (62, 64) zu drängen.

11. Verfahren nach Anspruch 7 oder 8, beinhaltend das Verwenden einer Kanalanordnung (496; 596), die erste Kanäle (50a; 150a, 150a'; 350a; 450a; 550a; 650a) aufweist, die mit zweiten Kanälen (50a; 150a, 150a'; 350a; 450a; 550a; 650a) verzahnt sind, um den mindestens einen Teil des Stroms des flüssigen Elektrolyten (22, 26) aus den Kanälen (50a; 150a, 150a'; 350a; 450a; 550a; 650a) eindeutig in die poröse Elektrode (62, 64) zu drängen, wobei die ersten Kanäle (50a; 150a, 150a'; 350a; 450a; 550a; 650a) jeweils eine Querschnittfläche aufweisen, die sich von einem Kanaleinlass (180; 280; 580) zu einem Kanalauslass (182; 282; 582) vergrößert, und wobei die zweiten Kanäle (50a; 150a, 150a'; 350a; 450a; 550a; 650a) jeweils eine Querschnittsfläche aufweisen, die sich von dem Kanaleinlass (180; 280; 580) zum Kanalauslass (182; 282; 582) verringert.

12. Verfahren nach einem der Ansprüche 7 bis 11, beinhaltend das Verwenden einer Kanalform, die eine Weite, die sich zwischen Seitenwänden (390a, 390b) erstreckt, eine Tiefe (D), die sich zwischen einer Bodenwand (150b; 350b; 650b) und einer offenen Oberseite (150c; 350c; 650c) erstreckt, und eine Vielzahl von Vorsprüngen (390) aufweist, die sich von der Bodenwand (150b; 350b; 650b) zur offenen Oberseite (150c; 350c; 650c) hin erstrecken, um den mindestens einen Teil des Stroms des flüssigen Elektrolyten (22, 26) aus den Kanälen (50a; 150a, 150a'; 350a; 450a; 550a; 650a) eindeutig in die poröse Elektrode (62, 64) zu drängen.

## Revendications

1. Batterie à circulation (20) comprenant :
un électrolyte liquide (22,26) comportant une espèce électrochimiquement active ;
une plaque bipolaire (50, 52 ; 150 ; 250 ; 450 ; 550 ; 650) comportant une face ayant des canaux (50a ; 150a, 150a' ; 350a ; 450a ; 550a ; 650a) à l'intérieur pour recevoir la circulation de l'électrolyte liquide (22,26) ; et
une électrode poreuse (62,64) en contact avec la face et s'étendant à travers les sommets ouverts (150c ; 350c ; 650c) des canaux (50a ; 150a, 150a' ; 350a ; 450a ; 550a ; 650a), l'électrode poreuse (62,64) étant catalytiquement active vis-à-vis de l'électrolyte liquide (22,26), et
dans laquelle les canaux (50a ; 150a, 150a' ; 350a ; 450a ; 550a ; 650a) de la plaque bipolaire (50, 52 ; 150 ; 250 ; 450 ; 550 ; 650) ont une forme de canal ayant une zone transversale qui varie sur la longueur du canal (50a ; 150a, 150a' ; 350a ; 450a ; 550a ; 650a) qui est configurée pour forcer positivement au moins une partie de la circulation de l'électrolyte liquide (22,26) dans l'électrode poreuse (62,64).

2. Batterie à circulation selon la revendication 1, dans laquelle l'agencement de canaux (496 ; 596) comporte un premier canal (54 ; 150a ; 454) et un second canal adjacent (56 ; 150a' ; 456) séparé du premier canal (150a ; 454) par une nervure (58).

3. Batterie à circulation selon la revendication 1 ou 2, dans laquelle les canaux (50a ; 150a, 150a' ; 350a ; 450a ; 550a ; 650a) ont un agencement de canaux en serpentin (496).

4. Batterie à circulation selon une quelconque revendication précédente, dans laquelle la forme de canal définit une zone transversale qui diminue d'une entrée de canal (180 ; 280 ; 580) à une sortie de canal (182 ; 282 ; 582), ou définit en variante une zone transversale qui augmente d'une entrée de canal (180 ; 280 ; 580) à une sortie de canal (182 ; 282 ; 582).

5. Batterie à circulation selon une quelconque revendication précédente, dans laquelle les canaux (50a ; 150a, 150a' ; 350a ; 450a ; 550a ; 650a) comportent des premiers canaux (50a ; 150a, 150a' ; 350a ; 450a ; 550a ; 650a) qui ont chacun une zone transversale qui augmente d'une entrée de canal (180 ; 280 ; 580) à une sortie de canal (182 ; 282 ; 582) et des seconds canaux (50a ; 150a, 150a' ; 350a ; 450a ; 550a ; 650a) qui ont chacun une zone transversale qui diminue de l'entrée de canal (180 ; 280 ; 580) à la sortie de canal (182 ; 282 ; 582), et les premiers canaux (50a ; 150a, 150a' ; 350a ; 450a ; 550a ; 650a) sont entrecroisés avec les seconds canaux (50a ; 150a, 150a' ; 350a ; 450a ; 550a ; 650a).

6. Batterie à circulation selon une quelconque revendication précédente, dans laquelle chacun des canaux (50a ; 150a, 150a' ; 350a ; 450a ; 550a ; 650a) a une largeur (W) s'étendant entre des parois latérales (390a,390b) et une profondeur (D) s'étendant entre une paroi inférieure (150b ; 350b ; 650b) et un sommet ouvert (150c ; 350c ; 650c), et la forme de canal comporte une pluralité de saillies (390) qui s'étendent depuis la paroi inférieure (150b ; 350b ; 650b) vers le sommet ouvert (150c ; 350c ; 650c), et dans laquelle, éventuellement, chacune de la pluralité de saillies (390) s'étend de l'une des parois latérales (390a,390b) à l'autre des parois latérales (390a,390b).

7. Procédé de fonctionnement d'une batterie à circulation (20), le procédé comprenant :
la fourniture d'une plaque bipolaire (50, 52 ; 150 ; 250 ; 450 ; 550 ; 650) comportant une face ayant des canaux (50a ; 150a, 150a' ; 350a ; 450a ; 550a ; 650a) à l'intérieur et une électrode poreuse (62, 64) en contact avec la face et s'étendant à travers les sommets ouverts (150c ; 350c ; 650c) des canaux (50a ; 150a, 150a' ; 350a ; 450a ; 550a ; 650a) ;
l'établissement d'une circulation d'un électrolyte liquide (22,26) dans les canaux (50a ; 150a, 150a' ; 350a ; 450a ; 550a ; 650a), l'électrolyte liquide (22,26) comportant une espèce électrochimiquement active et l'électrode poreuse (62, 64) étant catalytiquement active vis-à-vis de l'électrolyte liquide (22,26) ; et
le forçage positif d'au moins une partie de la circulation de l'électrolyte liquide (22, 26) des canaux (50a ; 150a, 150a' ; 350a ; 450a ; 550a ; 650a) vers l'électrode poreuse (62,64) en utilisant une forme de canal ayant une zone transversale qui varie sur la longueur du canal (50a ; 150a, 150a' ; 350a ; 450a ; 550a ; 650a).

8. Procédé selon la revendication 7, comportant le forçage positif de l'au moins une partie de la circulation en établissant un gradient de pression entre un premier canal (54 ; 150a ; 454) et un second canal adjacent (56 ; 150a' ; 456) afin de forcer l'au moins une partie de la circulation sur une nervure (58) entre le premier canal (54 ; 150a ; 454) et le second canal (56 ; 150a' ; 456).

9. Procédé selon la revendication 7 ou 8, comportant l'utilisation d'un agencement de canaux en serpentin (496) afin de forcer positivement l'au moins une partie de la circulation de l'électrolyte liquide (22,26) des canaux (50a ; 150a, 150a' ; 350a ; 450a ; 550a ; 650a) vers l'électrode poreuse (62,64).

10. Procédé selon l'une quelconque des revendications 7 à 9, comportant l'utilisation d'une forme de canal qui a une zone transversale qui diminue d'une entrée de canal (180 ; 280 ; 580) à une sortie de canal (182 ; 282 ; 582) afin de forcer positivement l'au moins une partie de la circulation de l'électrolyte liquide (22,26) des canaux (50a ; 150a, 150a' ; 350a ; 450a ; 550a ; 650a) vers l'électrode poreuse (62,64) ou en variante l'utilisation d'une forme de canal qui a une zone transversale qui augmente d'une entrée de canal (180 ; 280 ; 580) à une sortie de canal (182 ; 282 ; 582) afin de forcer positivement l'au moins une partie de la circulation de l'électrolyte liquide (22,26) des canaux (50a ; 150a, 150a' ; 350a ; 450a ; 550a ; 650a) vers l'électrode poreuse (62,64).

11. Procédé selon la revendication 7 ou 8, comportant l'utilisation d'un agencement de canaux (496 ; 596) qui a des premiers canaux (50a ; 150a, 150a' ; 350a ; 450a ; 550a ; 650a) qui sont entrecroisés avec des seconds canaux (50a ; 150a, 150a' ; 350a ; 450a ; 550a ; 650a) afin de forcer positivement l'au moins une partie de la circulation de l'électrolyte liquide (22,26) des canaux (50a ; 150a, 150a' ; 350a ; 450a ; 550a ; 650a) vers l'électrode poreuse (62,64), les premiers canaux (50a ; 150a, 150a' ; 350a ; 450a ; 550a ; 650a) ayant chacun une zone transversale qui augmente d'une entrée de canal (180 ; 280 ; 580) à une sortie de canal (182 ; 282 ; 582) et les seconds canaux (50a ; 150a, 150a' ; 350a ; 450a ; 550a ; 650a) ayant chacun une zone transversale qui diminue de l'entrée de canal (180 ; 280 ; 580) à la sortie de canal (182 ; 282 ; 582).

12. Procédé selon l'une quelconque des revendications 7 à 11, comportant l'utilisation d'une forme de canal qui a une largeur s'étendant entre des parois latérales (390a,390b), une profondeur (D) s'étendant entre une paroi inférieure (150b ; 350b ; 650b) et un sommet ouvert (150c ; 350c ; 650c) et une pluralité de saillies (390) s'étendant depuis la paroi inférieure (150b ; 350b ; 650b) vers le sommet ouvert (150c ; 350c ; 650c) afin de forcer positivement l'au moins une partie de la circulation de l'électrolyte liquide (22,26) des canaux (50a ; 150a, 150a' ; 350a ; 450a ; 550a ; 650a) vers l'électrode poreuse (62, 64).
